# EUROPEAN PATENT APPLICATION

(11) **EP 2 101 126 A2**
(43) Date of publication of application: **16.09.2009**
(21) Application number: 09425083.4
(22) Date of filing: 04.03.2009
(51) Int. Cl.: F25B 31/00

(54) **Compression system for a refrigerant of a refrigeration plant or the like**

(30) Priority: 10.03.2008 IT FI20080045
(71) Applicant: Officine Mario Dorin S.p.A, 50061 Compiobbi (IT)
(72) Inventor: Dallai, Mauro, 50126 Firenze (IT)
(74) Representative: Mannucci, Michele

(57) **Abstract**

There is described a compression system for a refrigerant of a refrigeration plant or the like comprising two or more reciprocating compressors (3; 5) at least one (3) of which with continuously variable speed. Each of these compressors (3; 5) presents a respective casing (7; 9) with a lower sump (11; 13) for the lubricating oil and are in fluid connection with one another by means of a distribution joint (15). A mixture of refrigerant and lubricating oil is fed into said distribution joint (15) through a supply inlet (19) disposed in an approximately intermediate position with respect to said compressors (3).

## Description

### Technical Field

The present invention relates to a compression system for a refrigerant of a refrigeration plant or the like, comprising two or more reciprocating compressors, in particular but not exclusively (semi-)hermetic motor compressors.

### State of the art

The use of hermetic or semi-hermetic motor compressors is generally known to supply the refrigeration circuit of refrigeration plants comprising a plurality of refrigeration units (such as refrigerated display units, cold rooms, refrigerated cabinets) for different types of products to be preserved according to different climatic conditions; these plants can vary greatly as regards cooling capacities and complexity of plant layout as a function of specific operating requirements.

In their fundamental characteristics (semi-)hermetic reciprocating compressors include a casing housing therein an electric motor, used to operate a drive shaft connected to a plurality of pistons, which slide in compression cylinders suitable to compress a refrigerant, such as Freon, to perform the refrigeration cycle.

Refrigeration plants are generally designed with a centralized compression system comprising a plurality of these compressors, which are activated in sequence as a function of the cooling capacity required.

It must be noted that in this type of motor compressor the lubricating oil of the compressor tends to be partly mixed with the refrigerant and to circulate together therewith in the refrigeration system.

It is therefore particularly important, for the efficiency and correct operation of the compressors, to check the lubricating oil during operation to avoid any lack of oil which could even lead to breakdown of the motor. Therefore, particularly efficient and complex lubrication circuits must be provided for the compressors, which increase the production and maintenance costs of this plant.

To attempt to simplify the system, it is known to provide compressors in parallel, also with different capacities, comprising a single supply and storage manifold for the refrigerant and for the lubricating oil. A disadvantage of this type of solution is given by the fact that oil balancing is not easy to achieve and can create problems, in particular when the system is provided with compressors with different capacities to one another, as pressure differences can occur in the lubricating oil sumps of the various compressors, causing oil to migrate from one compressor to the others and leave this compressor dry.

In particular, in this type of application the manifold connecting one compressor to the other is also used as oil reservoir in order to ensure continuity of the oil bath between the various sumps of the compressors. Therefore, a small overpressure in the oil sump of one compressor causes oil to migrate towards the other compressors with the risk of leaving the first compressor dry.

Another disadvantage is that the maintenance of this type of system is laborious, as in order to replace a damaged compressor it is necessary to remove most of the oil from the system, increasing maintenance times and costs.

Another drawback is that a compression system of this kind requires a large quantity of oil, as a minimum level of oil must be provided in the manifold, which also acts as reservoir, to ensure continuity of the oil bath between the sumps. Therefore, both costs for disposal and environmental impact of the spent oil are high. Lubricating oil is in fact a highly polluting product, which must be disposed of according to specific procedures.

Another disadvantage is that the refrigerant comes into contact with a considerably large surface of hot lubricating oil, given by the surface of the oil in the sumps and in the manifold. This causes noteworthy transmission of heat from the oil to the refrigerant, which considerably decreases the energy efficiency of the refrigeration plant. In fact, the refrigerant is used to transfer heat from a cold source to a source at a higher temperature, and therefore the heat exchanged from the oil to the refrigerant gas represents a further increase of the heat to be transferred, which causes an increase in the energy absorbed by the compressors and consequently a decrease in energy efficiency.

A further disadvantage is that these compression systems do not allow precise regulation of the refrigeration capacity as a function of the capacity required by the refrigeration units, as it is not possible to obtain high modulation of the capacity supplied by the compressors. Therefore both energy consumption and operating costs are high.

A further disadvantage is that these systems entail numerous starts and stops of the compressors and consequently increased wear on the mechanical parts with a decrease in the lifespan of the compressors. Currently therefore, notwithstanding developments in technology, problems remain and there is felt the need to provide compression systems for the refrigerant of refrigeration plants, which are more versatile and efficient to operate with respect to those currently in use and which are at the same time sufficiently reliable.

### Summary of the invention

According to one aspect, the present invention provides a compression system for a refrigerant of a refrigeration plant or the like, which entirely or partly overcomes at least one of the drawbacks of prior art systems.

The object of one embodiment of the invention is to obtain a system, which is more versatile, efficient and reliable to operate than current systems, while at the same time overcoming or reducing at least some of the aforesaid drawbacks and a relative refrigeration plant. The invention also relates to a refrigeration plant and a method to control this refrigeration plant.

These objects and advantages are achieved in substance with a compression system for a refrigerant of a refrigeration system or the like according to claim 1, with a refrigeration plant according to claim 13 and with a method according to claim 14.

The invention relates to a compression system for a refrigerant of a refrigeration plant or the like, which comprises two or more reciprocating compressors, at least one or which with continuously variable speed. Each compressor has a respective casing with a lower lubricating oil sump and is in fluid connection with the other compressors by means of a distribution joint, into which a mixture of refrigerant and lubricating oil is fed in a supply point arranged in an approximately intermediate position with respect to said compressors.

Advantageously, said supply point is in a position approximately equidistant with respect to the compressors, in particular it can be arranged on the distribution joint so that it is approximately the center of symmetry for all the compressors in any configuration thereof and as a function of the number of these compressors, as will be more apparent below.

Therefore, the compressors are advantageously and preferably arranged in an approximately symmetrical position with respect to the supply point and as close as possible to one another.

In this manner it is possible to efficiently supply lubricating oil to a plurality of compressors, which operate at different capacities obtaining correct oil distribution to the compressors and consequently more reliable operation of the system.

The compressor with variable speed is advantageously and preferably associated with at least one compressor with fixed speed, although it would also be possible to provide a different number of compressors, as will be described below.

In the preferred embodiment of the present invention, the distribution joint is associated with each casing at a height such as to maintain a sufficient oil level in the sumps for each compressor and at the same time prevent migration of the oil from one compressor to the other during operation, especially when the most powerful compressor operates at high rotation speeds. The distribution joint thus operates as hydraulic separation preventing continuity of the oil bath between the sumps.

In this manner it is possible to better safeguard correct operation of a plurality of compressors operating even at very different capacities from one another, in particular preventing the compressor with variable speed, when operating at full rotation speed, from drawing oil from the sumps of the other compressors and leaving these dry.

In a particularly advantageous embodiment of the invention, the compressor or compressors with variable speed of the system comprise an oil slinger which also functions as kinetic flywheel, i.e. suitable both to supply lubricating oil to the moving parts of the compressor and to decrease vibrations and noise maintaining a more even angular velocity of the motor shaft of this compressor also at low rotation speeds.

An advantage of a system according to the present invention is given by the fact that the supply of lubricating oil to each compressor in all operating conditions is improved, so that it is possible to provide in the same system at least one compressor which can operate within a wide range of continuously variable capacities (or rotation speeds), without this compressor with variable capacity (when operating at maximum revolutions) drawing oil from the other compressors and leaving these dry.

It is therefore possible to continuously regulate the refrigeration capacity of the plant within a wider range with respect to prior art systems, in a simpleer and more economical manner.

In particular, by providing at least one compressor, which operates at continuously variable rotation speed, a particularly versatile system is obtained, capable of precisely regulating the refrigeration capacity supplied to the plant allowing improved product preservation and considerable energy saving.

Another advantage is that the quantity of oil required for operation of such a system is minimum, as only the quantity of oil necessary to fill the sumps sufficiently must be provided. Therefore, there is a decrease in both costs and environmental impact for disposal of the spent oil.

Another advantage is that maintenance of the system is also improved. In fact, when a faulty compressor requires to be replaced, it is not necessary to remove most of the lubricating oil from the system but only to remove the faulty compressor, as the connection joint between compressors functions as an oil baffle. Therefore, it is not necessary to remove at least part of the oil present in the other compressors in order to replace the faulty compressor.

A further advantage is that the contact surface between the hot lubricating oil and the cold refrigerant is minimized, increasing the energy efficiency of the system.

Yet another advantage is that it is possible to obtain a wide capacity range and at the same time to improve oil balancing at the maximum operating capacity, as oil is not drawn by the compressor operating at maximum capacity and the remaining machines are not left completely dry. It is therefore not necessary to provide any control system for oil return from one compressor to the other.

An advantage of one embodiment of the invention is that a particularly simple and economical operation can be provided to control a plurality of compressors, which can operate at very different rotation speeds (or capacities) to one another, by continuously operating the compressor with variable speed and activating the compressor with fixed speed when required, regulating the variable speed of the compressor to cover the refrigeration capacity required by the system.

In particular, the variable-speed compressor can continue to run during operation continuously adapting the rotation speed to the refrigeration capacity required by the plant. The compressor with fixed speed is only started when the refrigeration capacity of the compressor operating at full speed does not cover plant requirements. Likewise, the fixed speed compressor continues to run until its refrigeration capacity, plus that of the variable speed compressor operating at minimum speed, exceed the plant requirements, and in this case the fixed speed compressor stops.

In this manner the number of starts and stops of the compressors is drastically reduced, resulting in an increase in their lifespan and a decrease in energy consumption.

Moreover, it is easy to provide different configurations or arrangements of a plurality of compressors with different capacities to one another (at least one of which with continuous variable capacity) as a function of specific construction or operation requirements.

Ultimately, the system according to the invention is particularly compact, simple in construction and operation, more versatile and at the same time more reliable than prior art systems in any operating condition.

Further advantageous characteristics and embodiments of the system according to the invention are indicated in the appended dependent claims and will be described in greater detail hereunder with reference to some non-limiting embodiments.

### Brief description of the drawings

The present invention can be better understood and its numerous objects and advantages will be apparent to those skilled in the art with reference to the accompanying schematic drawings, which show a non-limiting practical embodiment of the invention. In the drawing:
Fig. 1 shows a vertical section of an embodiment of the invention;
Fig. 2 shows a top view of the embodiment of Fig. 1;
Figs. 3 to 5 show further embodiments of the invention.

### Detailed description of some embodiments of the invention

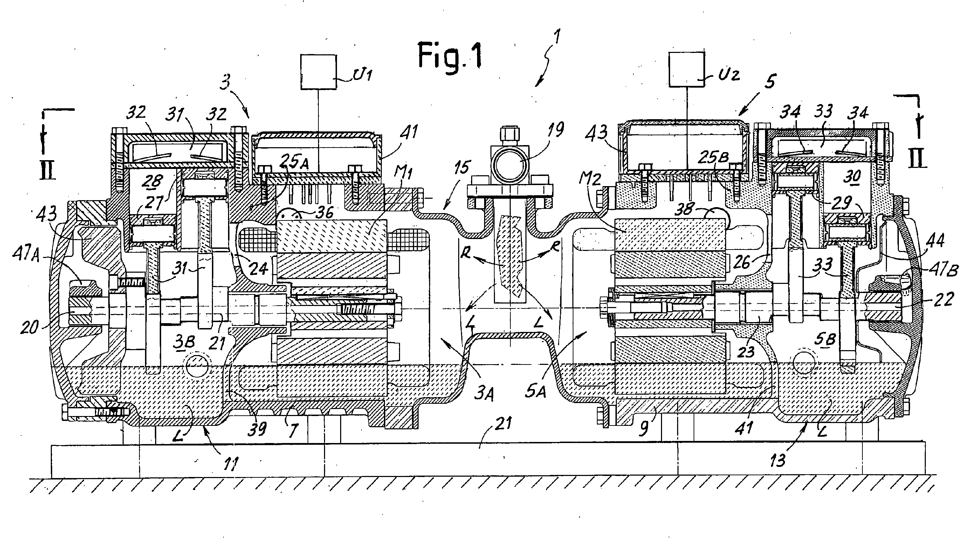

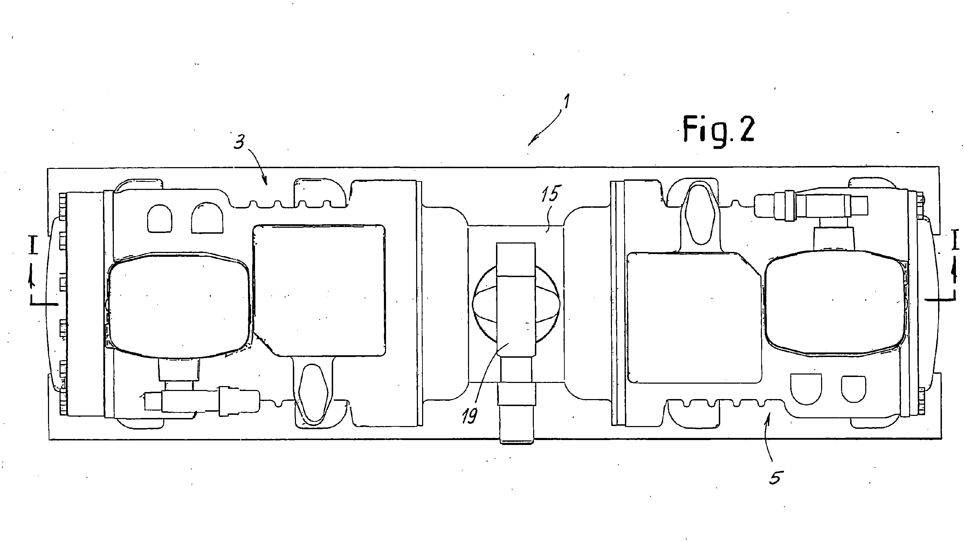

In the drawings, in which the same numbers correspond to the same parts in all the figures, a compression system for a refrigerant of a refrigeration system or the like is indicated generically with 1 (see Figs. 1 and 2) and comprises a reciprocating compressor 3 with continuously variable speed and a reciprocating compressor 5 with fixed speed arranged in close proximity to each other on top of a same bed 21. Each compressor 3 and 5 has a casing 7 and 9, respectively, including a lower area suitable to form a lower sump 11 and 13, respectively, for the lubricating oil. The casings 7 and 9 are in fluid connection with each other by means of a distribution joint 15, into which a mixture of refrigerant R and lubricating oil L is fed through a supply point 19 arranged in an approximately intermediate position with respect to the compressors 3 and 5.

The compressors 3 and 5 are advantageously of (semi-)hermetic type, i.e. inside the casing 7 and 9 there are provided a first motor chamber 3A and 5A, respectively, inside which an electric motor M1 and M2, respectively, is arranged, with a stator and a rotor mechanically connected to a drive shaft 21 and 23, respectively, and a second compression chamber 3B and 5B, respectively, adjacent to the motor chamber 3A and 5A and separated therefrom by means of a dividing wall 25A and 25B, respectively, housing compression pistons 27 and 29, respectively, associated with the shaft 21 and 23 by means of connecting rods 31 and 33, respectively. These pistons 27 and 29 are used to compress the refrigerant R inside compression chambers or cylinders 28 and 30, respectively, to make it circulate in the refrigeration machine, not shown in the figure for simplicity, with which the compression system 1 is associated.

Respective compression chambers 31 and 33 are in fluid connection with the compression cylinders 28 and 30, respectively, by means of outlet valves and jumpers 32 and 34, respectively, and also in connection with the suction chambers through inlet valves and jumpers, these latter not shown in the figure for simplicity.

A connection duct - Fig. 1 simply shows the through hole 36 and 38, respectively, of this duct - is provided to allow the refrigerant R to flow from the chamber 3A and 5A into the respective suction chamber 31 and 33.

The compressors 3 and 5 shown schematically in Fig.1 also comprise a box 41 and 43, respectively, with electrical contacts to control the respective motors M1 and M2 by means of a control unit U1 and U2, respectively, as described below. This type of motor compressor rotates at a rotation speed, which is dependent on the power supply frequency delivered by the motors controlled by the control unit.

Advantageously, the variable speed-reciprocating compressor 3 is controlled by an inverter type control unit U1 so as to provide a continuously variable operating range, while the fixed speed compressor 5 can be controlled by any known control unit U2. Clearly, it would also be possible for these control units U1 and U2 to be physically provided with a single electronic device capable of separately controlling both motor compressors 3 and 5, or the like.

The compression chamber 3B and 5B of each compressor 3 and 5 has a lower sump 35 and 37, respectively, where part of the lubricating oil L deposits, in fluid connection with the lower part of the respective motor chamber 3A and 5A by means of an opening 39 and 41, respectively, provided on the respective dividing wall 25A and 25B. The oil L passes from the sump 35 and 37 of the respective chamber 3A and 5A through the opening 39 and 41 in the respective motor chamber 3B and 5B to lubricate the moving components of the motor.

The compressors 3 and 5 advantageously and preferably comprise an oil slinger 43 and 44, respectively, suitable to pick up lubricating oil L from the respective oil sump 11 and 13 and to throw it by centrifugal force to supply the lubricating circuit.

In this embodiment, the lubrication circuit of each compressor preferably comprises an axial hole 20 and 22, respectively, in the respective drive shaft 21 and 23, with a plurality of radial holes - not shown in the figure for simplicity - corresponding with the surfaces of the components to be lubricated (pistons 27 and 29, connecting rods 31 and 33, and motor shaft 21 and 23), so as to supply oil L to these surfaces by means of centrifugal force during rotation of the drive shaft.

To supply oil L to the aforesaid lubrication system, the oil slingers 43 and 44 are mounted integral with the respective shaft 21 and 23 and partly immersed in the oil L contained in the respective sump 11 and 13. Part of the oil thrown by centrifugal force by the oil slingers 43 and 44 is collected in a reservoir 47A and 47B, respectively, in fluid connection with the axial hole 20 and 22 to be supplied to the respective motor shaft 21 or 23.

Advantageously, the oil slinger 43 of the variable speed compressor 3 is designed so that it also acts as a flywheel, i.e. it is produced with an appropriate shape and with an appropriate increased mass, so as to have a polar moment of inertia about the rotation axis thereof such as to reduce the vibrations and noise caused by the rotating kinematic motion during operation of this motor compressor 3 and to make the angular velocity of the drive shaft 21 more uniform in time.

In this manner the variable speed compressor 3 can be made to operate in a very wide range of capacities for this type of application, in particular from around 10 Hz to around 100 Hz, in a very simple and economical manner, from both the point of view of production and use thereof, and at the same time in a very efficient and reliable manner. In particular, the supply of oil L is sufficient to ensure correct operation thereof in any operating condition, even at higher rotation speeds, avoiding the risk of the other compressors remaining without oil.

Moreover, through holes 24 and 26, respectively, of large diameter are advantageously provided on each dividing wall 25A and 35B, to allow the refrigerant to pass from the motor chamber 3A and 5A to the compression chamber 3B and 5B and vice versa, so that the internal pressure between these chambers and between the reciprocating compressors 3 and 5 remains substantially the same in all operating conditions. In this manner it is possible to maintain a very low differential pressure between the oil sumps 11 and 13, further preventing transfer of oil L from one compressor to the other during operation of the variable speed compressor at any speed, both with the other compressor operating and stopped.

In a particularly advantageous embodiment of the invention, during operation of this compression system the variable speed compressor 3 is always active, while the fixed speed compressor 5 is activated when necessary, at the same time decreasing the rotation speed (and therefore the capacity supplied) of the variable speed compressor 3 as a function of the energy required by the refrigeration plant.

Clearly it would also be possible to provide for different operations, for example the fixed speed compressor 5 could always be active and the variable speed compressor 3 could be activated when necessary regulating the capacity thereof accordingly.

It is also clear how it may be easy to provide three or more compressors, at least one of which with continuously variable capacity, to regulate the supply capacity for the refrigerant of a refrigeration plant in an even more versatile manner, as described below.Fig.2 shows a top view of the two compressors 3 and 5 connected through a joint 15 on which the supply inlet 19 is arranged. In this view it can be noted in particular how the supply inlet 19 is fixed on the joint 19 in a substantially symmetrical position with respect to the compressors 3 and 5.

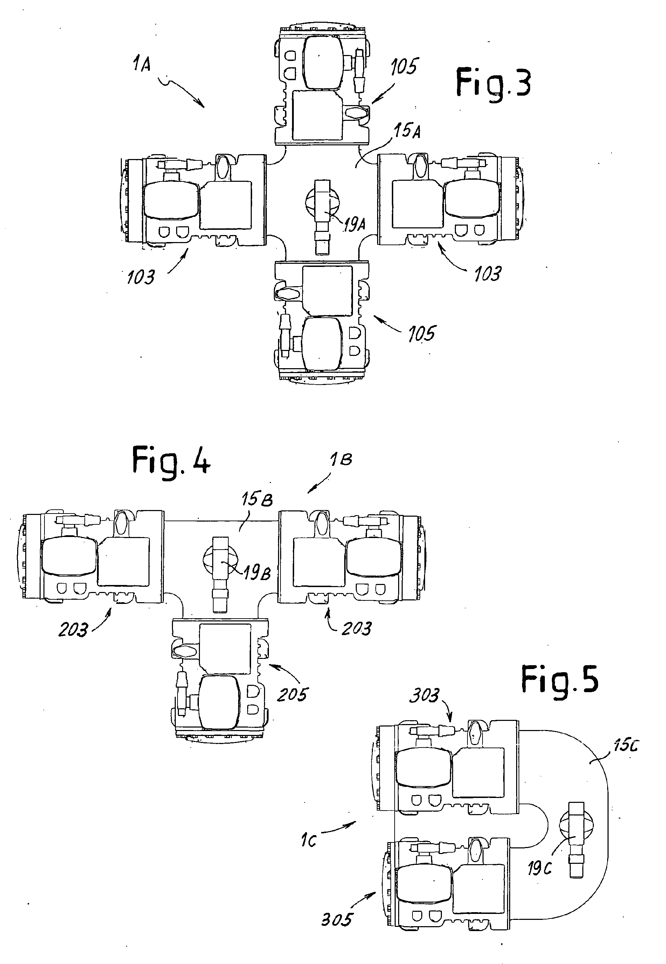

Fig.3 shows a compression system 1A according to a configuration different from that of Figs. 1 and 2, which comprises a four-way connection joint 15A in the central point of which a supply inlet 19A is provided for the refrigerant and the lubricating oil, so as to fluidly connect four compressors to one another, two of which with variable speed 103 and the other two with fixed speed 105.

In this case, advantageously one of the two variable speed compressors 103 is activated and the other variable speed compressor 103 is activated in succession at the time of need, as a function of the capacity required by the refrigeration plant. The fixed speed compressors 105 can be activated in succession when necessary to further increase the refrigeration capacity supplied.

Fig.4 shows a compression system 1B comprising a three-way connection joint 15B, i.e. substantially T-shaped, in the central point of which a supply inlet 19B is provided for the refrigerant and the lubricating oil, so as to fluidly connect three compressors to one another, one of which is a fixed speed compressor 205 and the other two are variable speed compressors 203.

In this embodiment, advantageously one of the two variable speed compressors 203 is activated and the other variable speed compressor 203 is activated in succession at the time of need. The fixed speed compressor 205 can be activated when necessary decreasing the speed of the compressors 203 as a function of the capacity required by the refrigeration plant.

Clearly, other different activation methods for these compressors 3-303 and 5-305 or other configurations are also possible, for example it would be possible to provide only one variable speed compressor and more than one fixed speed compressor in a same system, or yet another configuration.

It must be noted that the embodiments described with reference to Figs. 3 and 4 can provide a very wide range of refrigeration capacity to supply a particularly complex refrigeration plant comprising numerous different refrigeration units.

Moreover, it must be noted that in both the embodiments described in Figs. 3 and 4, positioning of the variable speed compressors 103 or 203 with respect to the fixed speed compressors 105 or 205 is irrelevant.

Fig.5 shows a further compression system 1C comprising a substantially U-shaped connection joint 15C in the central point of which a supply inlet 19C is provided for the refrigerant and the lubricating oil, so as to fluidly connect two compressors to each other, at least one of which is a variable speed compressor 303 and the other a fixed speed compressor 305. This system can be designed as a function of specific requirements of space in the refrigeration plant.

In any case, the supply inlet 19A-C is positioned on the distribution joint 19A-C in an approximately symmetrical position with respect to the compressors 3A-C and 5A-C and the distribution joint 19A-C substantially acts as oil baffle for the oil sumps of these compressors.

It is understood that the description above only represents practical non-limiting embodiments of the invention, which can vary in forms and arrangements without however departing from the scope of the concept on which the invention is based. Any reference numerals in the appended claims are provided purely to facilitate the reading thereof, in the light of the above description and accompanying drawings, and do not in any way limit the scope of protection.

## Claims

1. A compression system for a refrigerant of a refrigeration plant or the like comprising two or more reciprocating compressors (3; 103; 203; 303; 5; 105; 205; 305) at least one of which (3; 103; 203; 303) with continuously variable speed, each of said compressors (3; 5) having a respective casing (7; 9) with a lower sump (11; 13) for the lubricating oil and said compressors being in fluid connection with one another by means of a distribution joint (15; 15A; 15B; 15C), a mixture of refrigerant and lubricating oil being fed into said distribution joint (15; 15A; 15B; 15C) through a supply inlet (19; 19A; 19B; 19C) arranged in an approximately intermediate position with respect to said compressors (3; 103; 203; 303; 5; 105; 205; 305).

2. The compression system according to claim 1, **characterized in that** said position of the supply inlet (19; 19A; 19B; 19C) is approximately equidistant with respect to said compressors (3; 103; 203; 303; 5; 105; 205; 305).

3. The compression system according to claim 1 or 2, **characterized in that** said supply inlet (19; 19A; 19B; 19C) is the center of symmetry for said compressors (3; 103; 203; 303; 5; 105; 205; 305).

4. The compression system according to one or more of the preceding claims, **characterized in that** said distribution joint (19; 19A; 19B; 19C) is associated with each casing (7; 9) at a height such as to maintain a sufficient oil level in said sumps (11; 13) to safeguard correct operation of said compressors (3; 103; 203; 303; 5; 105; 205; 305) in any operating condition.

5. The compression system according to one or more of the preceding claims, **characterized in that** said distribution joint (19; 19A; 19B; 19C) is associated with each casing (7; 9) at a height such as to separate said sumps (11; 13) to prevent migration of the oil from one compressor to the other in any operating condition.

6. The compression system according to one or more of the preceding claims, **characterized in that** said at least one compressor with variable speed (3; 103; 203; 303) has an operating range that is continuously variable from around 10 Hz to around 100 Hz.

7. The compression system according to one or more of the preceding claims, **characterized in that** said at least one variable speed compressor (3; 103; 203; 303) is always active, while at least one fixed speed compressor (5; 105; 205; 305) is activated when necessary, regulating said at least one variable speed compressor (3; 103; 203; 303) accordingly.

8. The compression system according to one or more of the preceding claims, **characterized in that** said at least one variable speed compressor (3; 103; 203; 303) comprises an oil slinger (43) which also acts as a flywheel.

9. The compression system according to one or more of the preceding claims, **characterized in that** said compressors (3; 103; 203; 303; 5; 105; 205; 305) comprise through holes (39, 24; 41, 26) of large diameter to allow lubrication oil (L) and/or refrigerant (R) to pass from the motor chamber (3A; 5A) to a compression chamber (3B; 5B) of each of said reciprocating compressors (3, 5) and vice versa so that the internal pressure between said two chambers (3A, 3B; 5A, 5B) and between said reciprocating compressors (3; 5) is substantially identical.

10. The compression system according to one or more of the preceding claims, **characterized in that** it comprises a plurality of compressors (3; 103; 203; 303; 5; 105; 205; 305) arranged in an approximately symmetrical position with respect to said supply inlet (19; 19A; 19B; 19C).

11. The compression system according to one or more of the preceding claims, **characterized in that** said compressors (3; 103; 203; 303; 5; 105; 205; 305) are connected in a star or in a "T" or in a "U" configuration by means of said distribution joint (15; 15A; 15B; 15C).

12. The compression system according to one or more of the preceding claims, **characterized in that** said distribution joint (15; 15A; 15B; 15C) is structured so as to provide a fluid connection between said compressors in an approximately symmetrical position with respect to said supply inlet (19; 19A; 19B; 19C).

13. A refrigeration plant comprising at least one compression system (1; 1A; 1B; 1C) for the refrigerant (R) according to one or more of the preceding claims.

14. A method for controlling a compression system (1; 1A; 1B, 1C) of a refrigerant of a refrigeration plant, comprising at least two compressors, one of which controlled at variable speed and the other at fixed speed, **characterized in that** said variable speed compressor is operated continuously (3; 103; 203; 303), while said fixed speed compressor (5; 105; 205; 305) is activated when necessary, at the same time decreasing the rotation speed of said variable speed compressor (3; 103; 203; 303) as a function of the energy required by said refrigeration plant.
